# EUROPEAN PATENT APPLICATION

(11) **EP 4 376 520 A1**
(43) Date of publication of application: **29.05.2024**
(21) Application number: 21950936.1
(22) Date of filing: 20.07.2021
(51) Int. Cl.: H04W 72/04, H04W 68/00

(54) **TERMINAL AND COMMUNICATION METHOD**

(71) Applicant: NTT DOCOMO, INC., Tokyo 100-6150 (JP)
(72) Inventor: KUMAGAI, Shinya, Tokyo 100-6150 (JP); NAKAMURA, Takuma, Tokyo 100-6150 (JP); OHARA, Tomoya, Tokyo 100-6150 (JP); KURITA, Daisuke, Tokyo 100-6150 (JP); NAGATA, Satoshi, Tokyo 100-6150 (JP)
(74) Representative: Hoffmann Eitle
(86) International application number: PCT/JP2021/027219
(87) International publication number: WO 2023/002586

(57) **Abstract**

A terminal includes: a reception unit configured to receive, in a first band, information related to a second band; and a control unit configured to use together a signal in the first band and a signal in the second band. The reception unit receives a broadcast signal of the first band including system information.

## Description

### FIELD OF THE INVENTION

The present invention relates to a terminal and a communication method in a wireless communication system.

### BACKGROUND OF THE INVENTION

In 3GPP (3rd Generation Partnership Project), in order to realize further larger system capacity, further faster data transmission speed, further lower latency in a wireless communication section, etc., a wireless communication method called "5G" or "NR (New Radio)" has been discussed (hereinafter, the wireless communication method is referred to as "NR"). In 5G, various wireless technologies and network architectures are being discussed to satisfy the requirement of a radio link delay of 1 ms or less while achieving throughput of 10 Gbps or more (e.g., non-patent literature 1).

### Citation List

### Non-Patent Document

Non-Patent Document 1: 3GPP TS 38.213 V16.3.0 (2020-09)

### SUMMARY OF THE INVENTION

### TECHNICAL PROBLEM

In the future wireless communication system (for example, Release 17 and thereafter), introduction of terminals corresponding to various use cases such as IoT is expected.

However, it is not clear how UEs with different capabilities/categories will use resources. There is a risk of reduced system performance such as reduced efficiency of resource utilization unless resources are used appropriately.

The present invention has been made in view of the above, and it is an object of the present invention to provide a technique that enables to use resources appropriately depending on the capability.

### SOLUTION TO PROBLEM

According to the disclosed technology, a terminal is provided. The terminal includes: a reception unit configured to receive, in a first band, information related to a second band; and a control unit configured to use together a signal in the first band and a signal in the second band. The reception unit receives a broadcast signal of the first band including system information.

### ADVANTAGEOUS EFFECTS OF INVENTION

According to the disclosed technique, a technique is provided that enables to use resources appropriately depending on the capability.

### BRIEF DESCRIPTION OF THE DRAWINGS

[Fig. 1] Fig. 1 is a drawing illustrating a wireless communication system related to an embodiment of the present invention.
[Fig. 2] Fig. 2 is a drawing illustrating a situation in which a plurality of types of terminals co-exist.
[Fig. 3] Fig. 3 is a drawing illustrating a baseline channel and an additional channel.
[Fig. 4] Fig. 4 is a sequence diagram illustrating an example of a flow of B-PBCH transmission and reception and A-PBCH transmission and reception related to an embodiment 1.
[Fig. 5] Fig. 5 is a first drawing illustrating an indication indicating that there is A-PBCH related to an embodiment 1.
[Fig. 6] Fig. 6 is a second drawing illustrating an indication indicating that there is A-PBCH related to an embodiment 1.
[Fig. 7] Fig. 7 is a third drawing illustrating an indication indicating that there is A-PBCH related to an embodiment 1.
[Fig. 8] Fig. 8 is a fourth drawing illustrating an indication indicating that there is A-PBCH related to an embodiment 1.
[Fig. 9] Fig. 9 is a drawing illustrating an example of a specific corresponding relationship between B-PBCH and A-PBCH related to an embodiment 1.
[Fig. 10] Fig. 10 is a sequence diagram illustrating an example of a flow of B-PDSCH transmission and reception and A-PDSCH transmission and reception related to an embodiment 2.
[Fig. 11] Fig. 11 is a first drawing illustrating an indication indicating that there is A-PDSCH related to an embodiment 2.
[Fig. 12] Fig. 12 is a second drawing illustrating an indication indicating that there is A-PDSCH related to an embodiment 2.
[Fig. 13] Fig. 13 is a third drawing illustrating an indication indicating that there is A-PDSCH related to an embodiment 2.
[Fig. 14] Fig. 14 is a fourth drawing illustrating an indication indicating that there is A-PDSCH related to an embodiment 2.
[Fig. 15] Fig. 15 is a drawing illustrating an example of a functional structure of a base station 10 in an embodiment of the present invention.
[Fig. 16] Fig. 16 is a drawing illustrating an example of a functional structure of a terminal 20 in an embodiment of the present invention.
[Fig. 17] Fig. 17 is a drawing illustrating an example of a hardware structure of the base station 10 or the terminal 20 in an embodiment of the present invention.

### DETAILED DESCRIPTION OF THE PREFERRED EMBODIMENTS

In the following, referring to the drawings, one or more embodiments of the present invention will be described. It should be noted that the embodiments described below are examples. Embodiments of the present invention are not limited to the following embodiments.

In the following, referring to the drawings, one or more embodiments of the present invention will be described. It should be noted that the embodiments described below are examples. Embodiments of the present invention are not limited to the following embodiments.

In operations of a wireless communication system according to an embodiment of the present invention, a conventional technique will be used appropriately. Although the conventional technique is related to the existing NR, the conventional technique is not limited to the existing NR.

In addition, in this specification, terms used in the technical specifications of the existing NR or LTE, such as PDCCH, RRC, MAC, DCI, etc., are used. However, the channel names, protocol names, signal names, functional names, or the like, used in this specification may be referred to as different names.

### (System configuration)

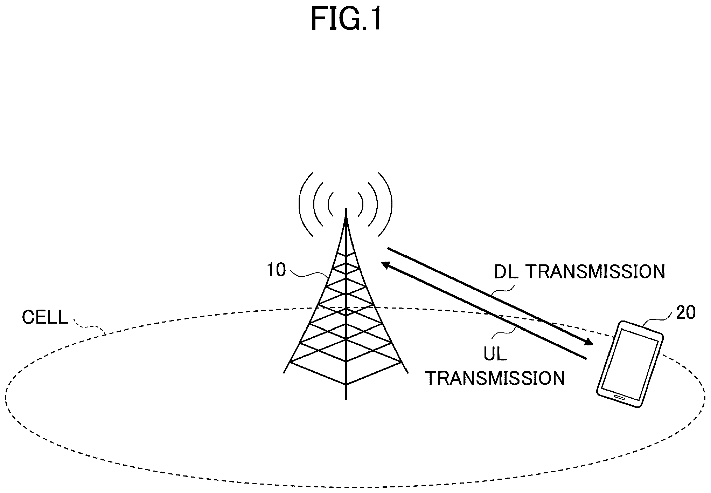

Fig. 1 is a drawing illustrating a wireless communication system related to an embodiment of the present invention.
As illustrated in Fig. 1, the wireless communication system according to an embodiment of the present invention includes a base station 10 and a terminal 20. In Fig. 1, a single base station 10 and a single terminal 20 are illustrated as an example. There may be a plurality of base stations 10 and a plurality of terminals 20.

The base station 10 is a communication device that provides one or more cells and performs wireless communications with the terminal 20. Physical resources of the radio signal may be defined in the time domain and the frequency domain, the time domain may be defined by the number of OFDM symbols, and the frequency domain may be defined by the number of sub-carriers or resource blocks. Further, a TTI (Transmission Time Interval) in the time domain may be a slot, or the TTI may be a subframe.

The base station 10 can perform carrier aggregation to communicate with the terminal 20 by bundling a plurality of cells (multiple CCs (component carriers)). In carrier aggregation, one primary cell (PCell) and one or more secondary cells (SCells) are used.

The base station 10 transmits a synchronization signal, system information, and the like, to the terminal 20. The synchronization signal is, for example, an NR-PSS and an NR-SSS. In addition, the synchronization signal may be an SSB. The system information is transmitted via, for example, NR-PBCH (Physical Broadcast Channel) or PDSCH (Physical Downlink Shared Channel), and may be referred to as broadcast information. As shown in Fig. 1, the base station 10 transmits a control signal or data in DL (Downlink) to the terminal 20 and receives a control signal or data in UL (Uplink) from the terminal 20. Note that, here, what is transmitted via a control channel such as PUCCH (Physical Uplink Control Channel) and PDCCH (Physical Downlink Control Channel) is called a control signal, and what is transmitted via a shared channel such as PUSCH and PDSCH is called data. However, these names are examples.

The terminal 20 may be a communication apparatus that includes a wireless communication function such as a smart-phone, a mobile phone, a tablet, a wearable terminal, a communication module for M2M (Machine-to-Machine), or the like. As shown in FIG. 1, the terminal 20 uses various communication services provided by the wireless communication system by receiving control signals or data in DL from the base station 10 and transmitting control signals or data in UL to the base station 10. Note that the terminal 20 may be referred to as a UE, and the base station 10 may be referred to as a gNB.

### (Problem of conventional technique)

Next, the problem of the conventional technique will be described. It is expected that, in the future wireless communication system/network (for example, 6G), many more use cases/terminals than 5G, NR, etc., will be supported in order to improve communication speed/capacity/reliability/latency performance/large number of connections/etc., in addition, for the sake of enhancement into a new technical area such as sensing.

In LTE or NR, the reduced function in which some functions are excluded from the mandatory functions supported by conventional terminals is defined as UE category/capability for IoT (Internet of Things). This UE category/capability includes, for example, eMTC (enhanced machine type communication) and NB (narrow band)-IoT in LTE, and RedCap (Reduced Capability) in NR. Thus, additional functions may be required in order to compensate for the degradation of characteristics due to the function reduction.

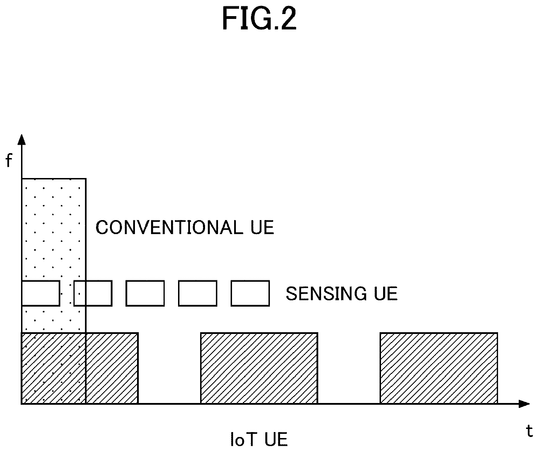

Fig. 2 is a drawing illustrating a situation in which a plurality of types of terminals co-exist. As illustrated in Fig. 2, there is a case that includes together: conventional UEs that perform communications in the wide band in a short period of time; IoT UEs that use the narrower band, a longer period of time, and repetition; and sensing UEs that use the narrower band and smaller pieces of information.

In a case where the addition of functions is performed for each use case/terminal as described above, there is a risk that the efficient operation together with conventional UEs becomes difficult.

### (Overview of embodiment)

Thus, in order to cope with the above-described problems of conventional technologies, in an embodiment of the present invention, a communication method will be described in which: the baseline channel (first band) that can be received by any UE; and the additional channel (second band) that is optimized for a specific UE/service, are used together. Because of using together the baseline channel and the additional channel, with respect to the additionally required resources, communications using the additional channel can be used while maintaining the connection by using the baseline channel.

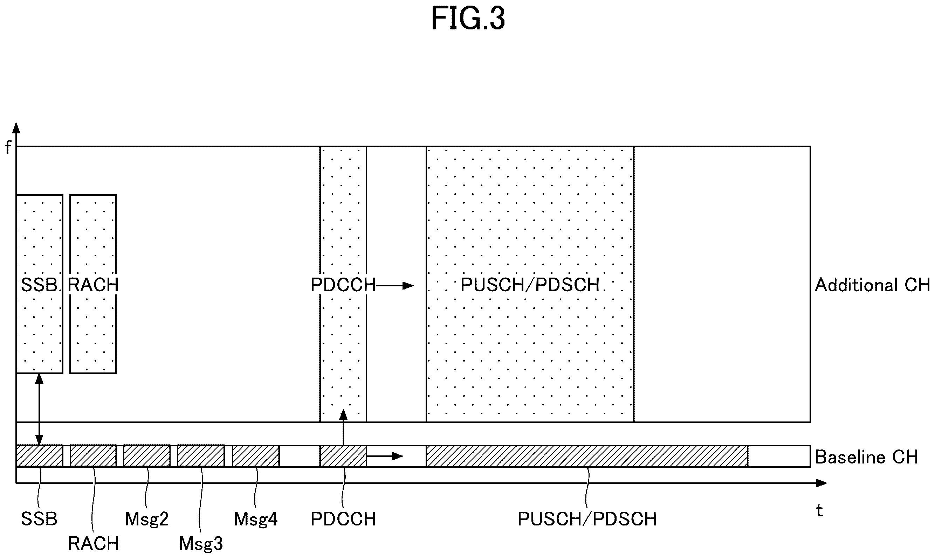

Fig. 3 is a drawing illustrating a baseline channel and an additional channel. The terminal 20 uses together a signal in the baseline channel and a signal in the additional channel. For example, as illustrated in Fig. 3, in the baseline channel, the terminal 20 may perform at least one of SSB (block including a synchronization signal) reception, RACH (Random Access Channel) transmission, Msg2 reception, Msg3 transmission, Msg4 reception, subsequent PDCCH reception, and PUSCH transmission/PDSCH reception scheduled by the PDCCH. In addition, in the additional channel, the terminal 20 may perform at least one of SSB reception, RACH transmission, subsequent PDCCH reception, and PUSCH transmission/PDSCH reception scheduled by the PDCCH.

Note that, in a case where the baseline channel and the additional channel are used together, it is necessary to discuss a specific method of transmission and reception of broadcast information. The broadcast information may be, for example, a master information block (MIB), a system information block (SIB), remaining minimum system information (RMSI, SIB1), other system information (OSI), paging for calling a terminal that is waiting for a call in the area at the time of call arrival, or the like.

Hereinafter, the embodiment 1, the embodiment 2, and the embodiment 3 will be described as specific embodiments with respect to a method of transmission and reception of broadcast information related to an embodiment of the present invention.

### (Embodiment 1)

This embodiment is a method in which the terminal 20 receives a broadcast signal of the baseline channel (B-PBCH) including system information.

In a case where the terminal 20 receives an indication indicating that there is a broadcast signal of the additional channel (A-PBCH), the terminal 20 may further receive the A-PBCH.

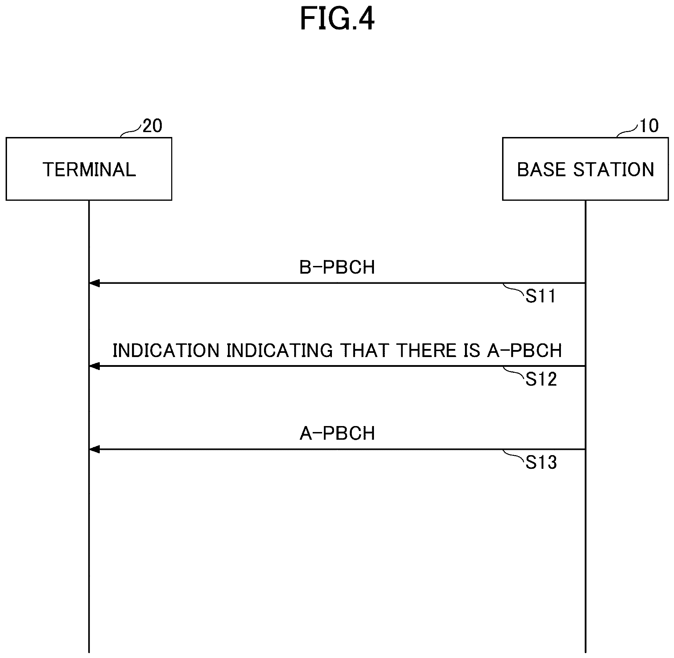

Fig. 4 is a sequence diagram illustrating an example of a flow of B-PBCH transmission and reception and A-PBCH transmission and reception related to an embodiment 1. The terminal 20 receives a B-PBCH from the base station 10 (step S11). Subsequently, the terminal 20 receives an indication indicating that there is an A-PBCH from the base station 10 (step S12). Subsequently, the terminal 20 receives the A-PBCH from the base station 10 (step S13).

### (Reception of B-PBCH related to an embodiment 1)

In the above-described step S11, the B-PBCH may include the entire system information, or may include only a portion of the system information (for example, MIB). In this case, the system information included in the B-PBCH (MIB, or the like) may include at least one of a parameter related to transmission and reception of a signal of the baseline channel and a parameter related to transmission and reception of a signal of the additional channel.

For example, the system information included in the B-PBCH (MIB, or the like) may include at least one of the entirety or a part of SFN (System frame number), subcarrier spacing (SCS), an offset value from the RB grid of SS/PBCH, resource mapping of demodulation reference signal (DMRS), PDCCH reception configuration, availability of connection to the channel/cell (Barred), availability of connection to another channel/cell/frequency, and the like.

Here, the subcarrier spacing may be configured in association with PDSCH including SIBx, a signal (for example, Msg2/4) in the initial access/random access, or PDSCH for paging.

In addition, the PDCCH reception configuration may be a configuration related to PDCCH including another system information (for example, SIB1) and scheduling PDSCH.

The parameter may be configured in common for terminals 20 that perform transmission and reception using the channel.

In addition, the start symbol of the B-PBCH may be determined according to the subcarrier spacing.

The B-PBCH may be time-multiplexed or frequency-multiplexed with the synchronization signal of the baseline channel, the demodulation reference signal of the B-PBCH, etc. For example, the B-PBCH may be multiplexed with B-SS (baseline-synchronization signal), DMRS for B-PBCH demodulation, CRS (Cell-specific Reference Signal), etc.

The B-PBCH may be enabled to be received by terminals 20 of a freely selected type or terminal capability, and, in addition, is not required to be enabled to be received by some terminals 20 that are specified by the technical specification.

### (Reception of A-PBCH related to an embodiment 1)

In addition, as illustrated in step S12 and step S13 in Fig. 4, the terminal 20 may receive an A-PBCH in a case where an indication indicating that there is an A-PBCH is received.

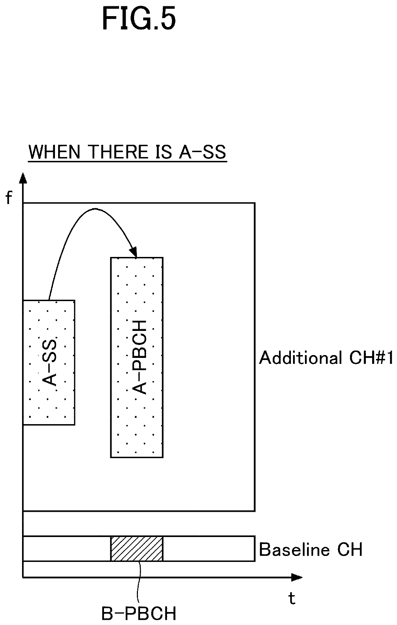

Fig. 5 is a first drawing illustrating an indication indicating that there is an A-PBCH related to an embodiment 1.

The indication indicating that there is an A-PBCH may be included in an indication indicating that there is a synchronization signal in the additional channel (A-SS: additional-synchronization signal), or may be indicated independently from the indication indicating that there is an A-SS.

In a case where the indication indicating that there is an A-PBCH is included in the indication indicating that there is an A-SS, in response to receiving, by the terminal 20, the indication indicating that there is an A-SS, the terminal 20 receives the A-PBCH by assuming that the indication indicating that there is an A-PBCH has been received.

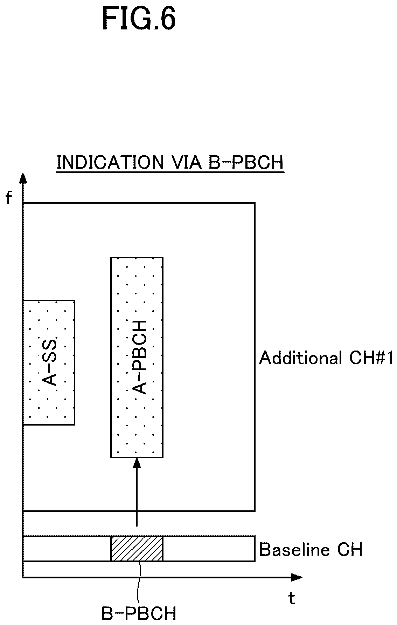

Fig. 6 is a second drawing illustrating an indication indicating that there is an A-PBCH related to an embodiment 1. The indication indicating that there is an A-PBCH may be included in the B-PBCH. In this case, in response to receiving, by the terminal 20, the B-PBCH including the indication indicating that there is an A-PBCH, the terminal 20 receives the A-PBCH.

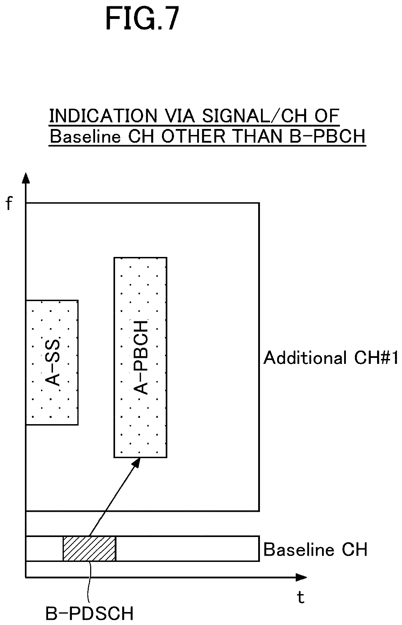

Fig. 7 is a third drawing illustrating an indication indicating that there is an A-PBCH related to an embodiment 1. The indication indicating that there is an A-PBCH may be included in a signal/channel of the baseline channel other than the B-PBCH (for example, B-PDSCH, or the like). In this case, in response to receiving, by the terminal 20, the signal/channel of the baseline channel other than the B-PBCH including the indication indicating that there is an A-PBCH, the terminal 20 receives the A-PBCH.

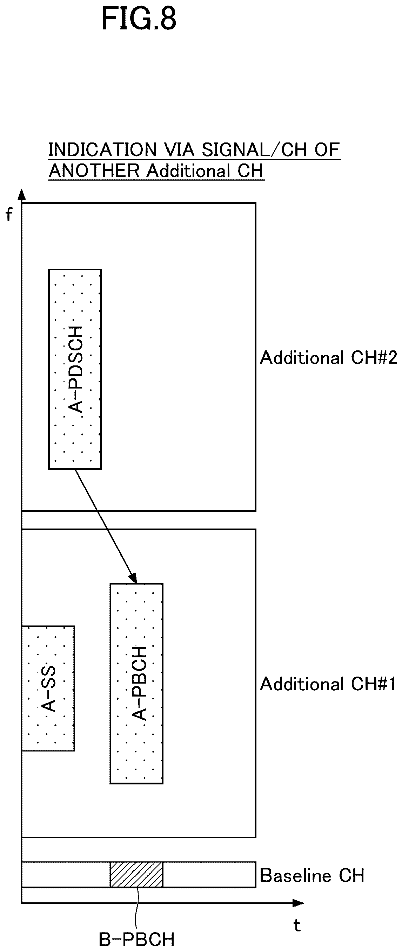

Fig. 8 is a fourth drawing illustrating an indication indicating that there is an A-PBCH related to an embodiment 1. The indication indicating that there is an A-PBCH may be included in a signal/channel of an additional channel (third band) different from the additional channel (second band) in which an A-PBCH is transmitted (for example, A-PDSCH, or the like).

In addition, the indication indicating that there is an A-PBCH may be an indication including an A-PBCH resource of at least one of time, frequency, and code.

In addition, the terminal 20 may refrain from receiving the A-PBCH in a case where an indication indicating that there is no A-PBCH is received, and may receive the A-PBCH in a case where an indication indicating that there is no A-PBCH is not received. An operation of the terminal 20 in this case may be defined in the technical specification.

In addition, the terminal 20 may receive the A-PBCH or is not required to receive the A-PBCH in a case where an indication indicating that there is an A-PBCH or there is no A-PBCH is not received. An operation of the terminal 20 in this case may be defined in the technical specification.

The A-PBCH may include only a portion of the system information (for example, MIB). In this case, the system information included in the A-PBCH (MIB, or the like) may include at least one of a parameter related to transmission and reception of a signal of the baseline channel and a parameter related to transmission and reception of a signal of the additional channel.

For example, the B-PBCH may include a parameter related to transmission and reception of a signal of the baseline channel and the A-PBCH may include a parameter related to transmission and reception of a signal of the additional channel.

In addition, the configuration or information related to detection or demodulation of the A-PBCH may be defined by the technical specification, may be included in the B-PBCH, may be included in the signal/channel of the baseline channel other than the B-PBCH (for example, B-PDSCH, or the like), or may be included in the signal/channel of an additional channel (third band) different from the additional channel (second band) in which the A-PBCH is transmitted (for example, A-PDSCH, or the like).

The A-PBCH may be enabled to be received by terminals 20 with a specific type or terminal capability.

In addition, the A-PBCH and the B-PBCH may be multiplexed with respect to at least one of time, frequency, or code within the same BWP (Bandwidth Part) or within the different BWP in the same cell, or may be transmitted in different cells. In other words, with respect to the baseline channel and the additional channel, a common BWP may be defined or configured, or individual BWPs may be defined or configured.

In addition, the terminal 20 may assume that the A-PBCH and the B-PBCH are to be transmitted by using the same transmission beam (spatial filter). In addition, the terminal 20 may assume that the A-PBCH and the B-PBCH that have a specific corresponding relationship are to be transmitted by using the same transmission beam (spatial filter). Here, the assumption may be limited to a case in which the A-PBCH and the B-PBCH are in at least one of the same BWP, the same cell, the same frequency band, or the same frequency range (FR1/FR2).

Here, whether there is a specific corresponding relationship may be indicated from the base station 10 to the terminal 20. The indication indicating whether there is a specific corresponding relationship may be included in the B-PBCH, may be included in the signal/channel of the baseline channel other than the B-PBCH (for example, B-PDSCH, or the like), or may be included in the signal/channel of an additional channel (third band) different from the additional channel (second band) in which the A-PBCH is transmitted (for example, A-PDSCH, or the like).

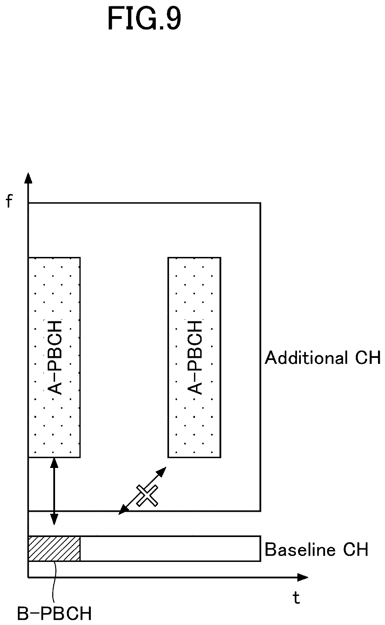

Fig. 9 is a drawing illustrating an example of a specific corresponding relationship between B-PBCH and A-PBCH related to an embodiment 1. As illustrated in Fig. 9, the A-PBCH and the B-PBCH may be determined to have a specific corresponding relationship when the A-PBCH and the B-PBCH overlap in the time domain, that is, when multiplexing is performed in the frequency or in the code.

Here, the case in which there is a specific corresponding relationship may be limited to at least one of the same BWP, the same cell, the same frequency band, or the same frequency range (FR1/FR2).

In addition, the terminal 20 may assume that the transmission period of the A-PBCH is the same as or is different from the transmission period of the B-PBCH. In addition, the terminal 20 may assume that the A-PBCH and the B-PBCH have a same transmission period when the A-PBCH and the B-PBCH have a specific corresponding relationship.

### (Effects of a wireless communication system related to an embodiment 1)

In a wireless communication system related to an embodiment of the present invention, the terminal 20 receives a broadcast signal of the baseline channel including system information (B-PBCH). According to the above configuration, the system information can be appropriately transmitted and received in a case where the baseline channel and the additional channel are used together, and thus, resources can be used appropriately in accordance with the capability.

In a case where the terminal 20 receives an indication indicating that there is a broadcast signal of the additional channel (A-PBCH), the terminal 20 may further receive the A-PBCH. According to the above configuration, the system information can be appropriately transmitted and received by effectively using the additional channel in a case where the bandwidth of the baseline channel is small.

### (Embodiment 2)

This embodiment is a method in which the terminal 20 receives a shared channel of the baseline channel (B-PDSCH) including system information.

In a case where the terminal 20 receives an indication indicating that there is a shared channel of the additional channel (A-PDSCH) including system information, the terminal 20 may further receive the A-PDSCH including system information.

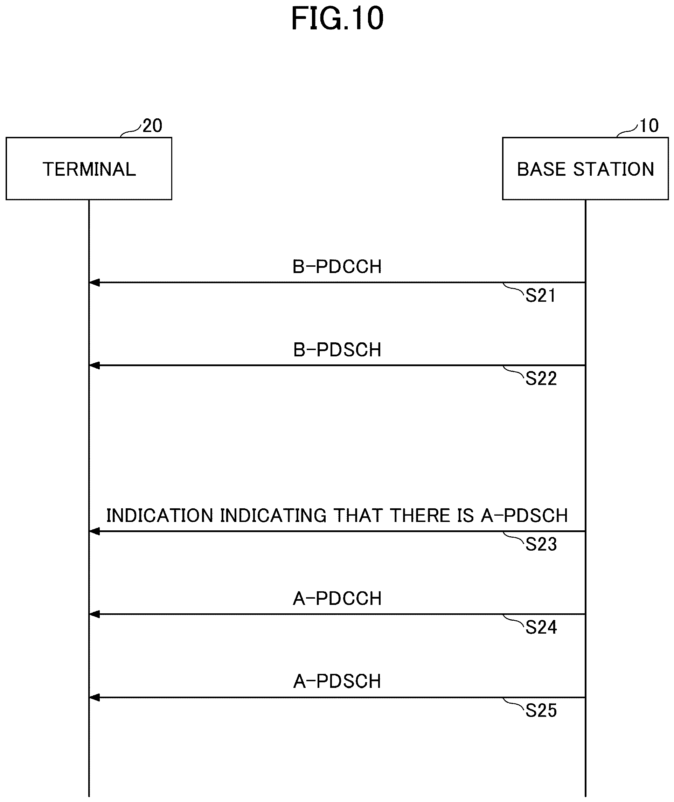

Fig. 10 is a sequence diagram illustrating an example of a flow of B-PDSCH transmission and reception and A-PDSCH transmission and reception related to an embodiment 2. The terminal 20 receives a B-PDCCH from the base station 10 (step S21). Here, the B-PDCCH includes DCI (Downlink Control Information) that schedules a B-PDSCH.

Subsequently, the terminal 20 receives the B-PDSCH according to the schedule specified by the DCI (step S22).

The terminal 20 further receives an indication indicating that there is an A-PDSCH including system information (step S23). Subsequently, the terminal 20 receives the A-PDCCH from the base station 10 (step S24). Here, the A-PDCCH includes DCI that schedules the A-PDSCH including system information.

Subsequently, the terminal 20 receives the A-PDSCH including system information according to the schedule specified by the DCI (step S25).

### (Reception of B-PDSCH related to an embodiment 2)

In the above-described step S22, the B-PDSCH may include the entire system information, or may include only a part of the system information (for example, at least one of MIB or SIB).

For example, the reception of B-PBCH related to an embodiment 1 may be combined, and, MIB may be included in the B-PBCH and SIB may be included in the B-PDSCH.

Here, with respect to a specific SIB (for example, SIB1) and another SIB, configurations related to the B-PDCCH including DCI that schedules the B-PDSCH including respective SIBs may be different from each other.

For example, the configuration related to the B-PDCCH including DCI that schedules SIB1 may be indicated by MIB that is transmitted by the B-PBCH related to an embodiment 1. In addition, the configuration related to the B-PDCCH including DCI that schedules another SIB may be indicated by the SIB1, and, in a case where the configuration is not indicated, the configuration may be determined to be the same as the configuration related to the B-PDCCH including DCI that schedules SIB1.

The DCI format transmitted by the B-PDCCH may be the same as or may be a part of the DCI format that can be transmitted by a PDCCH of the additional channel (A-PDCCH). For example, the DCI format transmitted by the B-PDCCH may be a fallback DCI format, a DCI format with only a specific field, or the like.

The SIB or a specific SIB (for example, SIB1) included in the B-PDSCH may include at least one of a parameter related to transmission and reception of a signal of the baseline channel and a parameter related to transmission and reception of a signal of the additional channel.

For example, the SIB or a specific SIB (for example, SIB1) included in the B-PDSCH may include at least one of a synchronization signal (SS) transmission timing, an SS transmission period, SS transmission power, a TDD (Time Division Duplex) pattern, a DL reception configuration (paging, PDCCH, PDSCH), a UL transmission configuration (RACH, PUSCH, PUCCH), etc.

The parameter may be configured in common for terminals 20 that perform transmission and reception using the channel.

The B-PDSCH including system information and the B-PDCCH including DCI that schedules the B-PDSCH may be enabled to be received by terminals 20 that have a freely selected type or terminal capability, and, is not required to be enabled to be received by some of the terminals 20 specified by the technical specification.

### (Reception of A-PDSCH related to an embodiment 2)

In addition, as illustrated in steps from step S23 to step S25 in Fig. 10, the terminal 20 may receive the A-PDSCH including system information in a case where an indication indicating that there is an A-PDSCH including system information is received.

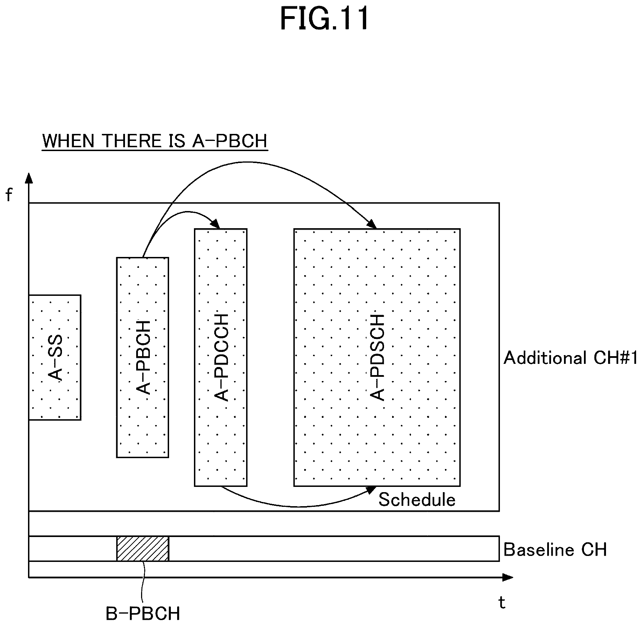

Fig. 11 is a first drawing illustrating an indication indicating that there is an A-PDSCH related to an embodiment 2.

The indication indicating that there is an A-PDSCH including system information may be included in the indication indicating that there is an A-PBCH, or may be indicated independently from the indication indicating that there is an A-PBCH.

In a case where an indication indicating that there is an A-PDSCH including system information is included in an indication indicating that there is an A-PBCH, in response to receiving the indication indicating that there is an A-PBCH, the terminal 20 receives an A-PDCCH that schedules an A-PDSCH and the A-PDSCH including system information by assuming that an indication indicating that there is an A-PDSCH including system information has been received.

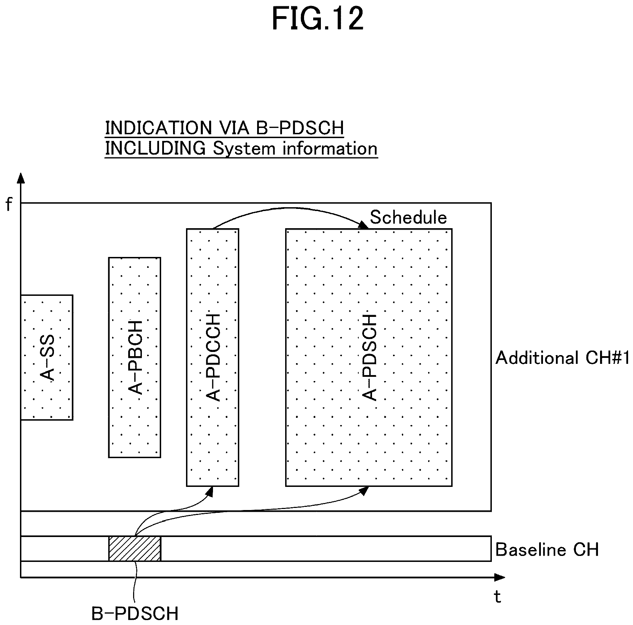

Fig. 12 is a second drawing illustrating an indication indicating that there is an A-PDSCH related to an embodiment 2. The indication indicating that there is an A-PDSCH including system information may be included in a B-PDSCH including system information. In this case, in response to receiving the B-PDSCH including system information and including an indication indicating that there is an A-PDSCH, the terminal 20 receives: an A-PDCCH that schedules an A-PDSCH; and the A-PDSCH including system information.

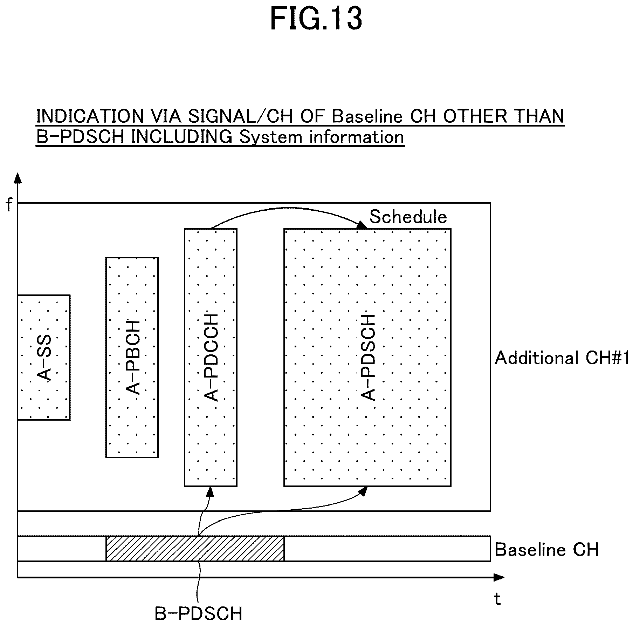

Fig. 13 is a third drawing illustrating an indication indicating that there is an A-PDSCH related to an embodiment 2. The indication indicating that there is an A-PDSCH including system information may be included in a signal/channel of the baseline channel other than the B-PDSCH including system information (for example, a B-PDSCH that does not include system information, or the like). In this case, in response to receiving the signal/channel of the baseline channel other than the B-PBCH including system information and including an indication indicating that there is an A-PDSCH including system information, the terminal 20 receives: an A-PDCCH that schedules an A-PDSCH; and the A-PDSCH including system information.

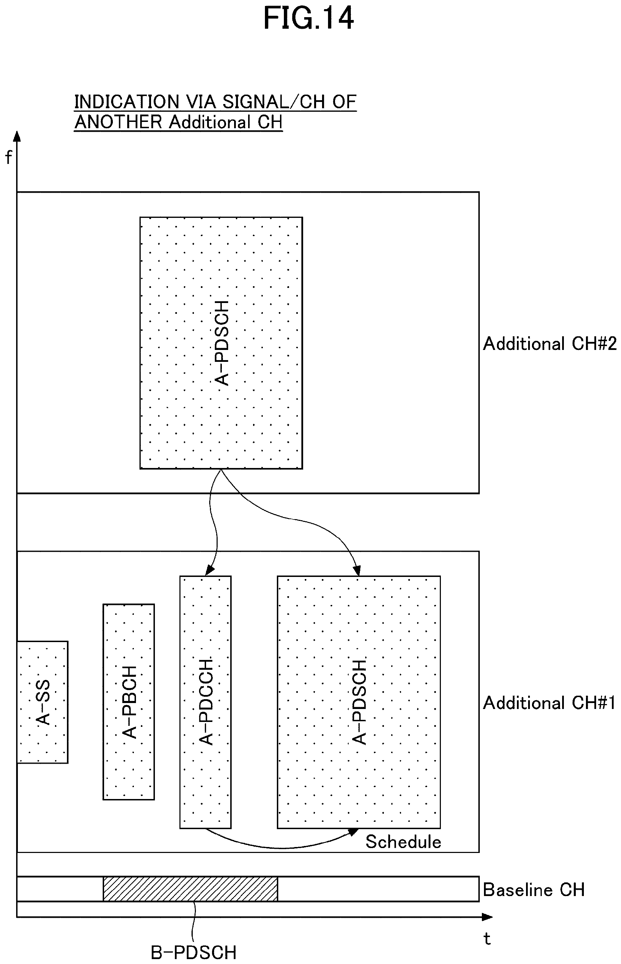

Fig. 14 is a fourth drawing illustrating an indication indicating that there is an A-PDSCH related to an embodiment 2. The indication indicating that there is an A-PDSCH including system information may be included in a signal/channel of an additional channel (third band) that is different from the additional channel (second band) in which the A-PDSCH including system information is transmitted (for example, an A-PDSCH that does not include system information, or the like).

In addition, the terminal 20 is not required to receive an A-PDSCH including system information in a case where an indication indicating that there is no A-PDSCH including system information is received, and the terminal 20 may receive an A-PDSCH including system information in a case where the indication indicating that there is no A-PDSCH including system information is not received. An operation of the terminal 20 in this case may be defined in the technical specification.

In addition, the terminal 20 may receive an A-PDSCH including system information or is not required to receive an A-PDSCH including system information in a case where an indication indicating that there is an A-PDSCH including system information or that there is no A-PDSCH including system information is not received. An operation of the terminal 20 in this case may be defined in the technical specification.

The A-PDSCH may include only a part of system information (for example, MIB), or may include a part of system information excluding the MIB (SIB).

Here, with respect to the specific SIB (for example, SIB1) and another SIB, configurations related to the A-PDCCH that schedules the A-PDSCH including respective SIBs may be different from each other.

For example, the configuration related to the A-PDCCH that schedules SIB1 may be indicated by the MIB transmitted by the B-PBCH related to an embodiment 1 or by the MIB transmitted by the A-PBCH related to an embodiment 1. In addition, the configuration related to the A-PDCCH that schedules another SIB may be indicated by SIB1, and, in a case where the configuration is not indicated, the configuration may be determined to be the same as the configuration related to the A-PDCCH that schedules SIB1.

The SIB or a specific SIB (for example, SIB1) included in the A-PDSCH may include at least one of a parameter related to transmission and reception of a signal of the baseline channel and a parameter related to transmission and reception of a signal of the additional channel. For example, the B-PDSCH may include the parameter related to transmission and reception of a signal of the baseline channel, and the A-PDSCH may include the parameter related to transmission and reception of a signal of the additional channel.

An A-PDSCH including system information and an A-PDCCH including DCI that schedules the A-PDSCH may be enabled to be received by terminals 20 that have a specific type or terminal capability.

In addition, an A-PDSCH and a B-PDSCH including system information, and an A-PDCCH and a B-PDCCH including DCIs that schedule the A-PDSCH and the B-PDSCH may be multiplexed with respect to at least one of time, frequency, or code within the same BWP or within the different BWP in the same cell, or may be transmitted in different cells. In other words, with respect to the baseline channel and the additional channel, a common BWP may be defined or configured, or individual BWPs may be defined or configured.

In addition, the terminal 20 may assume that at least one of: an A-PDSCH and a B-PDSCH including system information; and an A-PDCCH and a B-PDCCH including DCIs that schedule the A-PDSCH and the B-PDSCH, are transmitted by using the same transmission beam (spatial filter). Here, the above-described assumption may be limited to a case in which at least one of the A-PDSCH and the B-PDSCH including system information and the A-PDCCH and the B-PDCCH including DCIs that schedule the A-PDSCH and the B-PDSCH is in at least one of the same BWP, the same cell, the same frequency band, or the same frequency range (FR1/FR2). In addition, the terminal 20 may assume that at least one of: an A-PDSCH and a B-PDSCH with a specific corresponding relationship; and an A-PDCCH and a B-PDCCH with a specific corresponding relationship, are transmitted by using the same transmission beam (spatial filter).

Here, whether there is a specific corresponding relationship may be indicated from the base station 10 to the terminal 20. The indication indicating whether there is a specific corresponding relationship may be included in the B-PDSCH including system information, may be included in the signal/channel of the baseline channel other than the B-PDSCH including system information (for example, a B-PDSCH that does not include system information, or the like), or may be included in the signal/channel of an additional channel (third band) different from the additional channel (second band) in which the A-PDSCH including system information is transmitted (for example, an A-PDSCH that does not include system information, or the like).

It may be determined that there is a specific corresponding relationship when at least one of: the A-PDSCH and the B-PDSCH including system information; and the A-PDCCH and the B-PDCCH including DCIs that schedule the A-PDSCH and the B-PDSCH overlap with each other in the time domain, that is, are multiplexed in the frequency domain or code domain.

Here, the case in which there is a specific corresponding relationship may be limited to at least one of the same BWP, the same cell, the same frequency band, or the same frequency range (FR1/FR2).

In addition, the terminal 20 may assume that at least one of: the A-PDSCH and the B-PDSCH including system information; and the A-PDCCH and the B-PDCCH including DCIs that schedule the A-PDSCH and the B-PDSCH, have a same transmission period or have different transmission periods. In addition, the terminal 20 may assume that at least one of: the A-PDSCH and the B-PDSCH with a specific corresponding relationship; and the A-PDCCH and th B-PDCCH with a specific corresponding relationship, have a same transmission period.

### (Effects of a wireless communication system related to an embodiment 2)

In a wireless communication system related to an embodiment of the present invention, the terminal 20 receives a shared channel of the baseline channel (B-PDSCH) including system information. According to the above configuration, the system information can be appropriately transmitted and received in a case where the baseline channel and the additional channel are used together, and thus, resources can be used appropriately in accordance with the capability.

In a case where the terminal 20 receives an indication indicating that there is a shared channel of the additional channel (A-PDSCH) including system information, the terminal 20 may further receive the A-PDSCH including system information. According to the above configuration, the system information can be appropriately transmitted and received by effectively using the additional channel in a case where the bandwidth of the baseline channel is small.

### (Relationship between an embodiment 1 and an embodiment 2)

The wireless communication system may independently perform an embodiment 1 and an embodiment 2, or may perform both an embodiment 1 and an embodiment 2. By performing both an embodiment 1 and an embodiment 2, system information can be transmitted and received in a distributed manner, and thus, resources can be effectively used.

### (Embodiment 3)

This embodiment is a method in which the terminal 20 receives a shared channel of the baseline channel (B-PDSCH) including paging information.

The terminal 20 may further receive an A-PDSCH including paging information in a case where an indication indicating that there is a shared channel of the additional channel (A-PDSCH) including paging information is received.

The flow of the B-PDSCH transmission and reception and the A-PDSCH transmission and reception related to an embodiment of the present invention is the same as that of the B-PDSCH transmission and reception and the A-PDSCH transmission and reception related to an embodiment 2 illustrated in Fig. 10.

### (Reception of B-PDSCH related to an embodiment 3)

At least one of the configuration of the B-PDSCH including paging information and the configuration related to the B-PDCCH including DCI that schedules the B-PDSCH may be indicated by at least one of MIB and SIB, and, in a case where the configurations are not indicated, the configurations may be the same as the configuration related to the B-PDSCH including SIB1 and the B-PDCCH including DCI that schedules the B-PDSCH.

The DCI format transmitted by the B-PDCCH may be the same as or may be a part of the DCI format that can be transmitted by a PDCCH of the additional channel (A-PDCCH). For example, the DCI format transmitted by the B-PDCCH may be a fallback DCI format, a DCI format with only a specific field, or the like.

The DCI that schedules the B-PDSCH including paging information may schedule at least one of the B-PDSCH and the A-PDSCH as in the cross carrier scheduling.

The paging information included in the B-PDSCH may include one or more UE identifiers. In this case, when the UE identifier matches the UE identifier of the terminal 20 itself, the terminal 20 may assume that the paging information is for the terminal 20 itself, and may perform an operation of changing the UE state (for example, transition to the RRC CONNECTED state according to the random access process).

In addition, the UE identifier in this case may be indicated in common, or may be indicated separately, for the baseline channel and the additional channel. In other words, the state management of the terminal 20 may be performed in common, or may be performed separately, for the baseline channel and for the additional channel.

The B-PDSCH including paging information and the B-PDCCH including DCI that schedules the B-PDSCH is not required to be enabled to be received by terminals 20 with any type or terminal capability, and is further not required to be enabled to be received by some terminals 20 specified by the technical specification.

### (Reception of A-PDSCH related to an embodiment 3)

In addition, as illustrated in steps from step S23 to step S25 in Fig. 10, the terminal 20 may receive an A-PDSCH including paging information in a case where an indication indicating that there is an A-PDSCH including paging information is received.

At least one of the configuration of the A-PDSCH including paging information and the configuration related to the A-PDCCH including DCI that schedules the A-PDSCH may be indicated by at least one of MIB and SIB, and, in a case where the configurations are not indicated, the configurations may be the same as that of the A-PDSCH including SIB1 and the A-PDCCH including DCI that schedules the A-PDSCH.

The terminal 20 that has received the configurations is not required to receive at least one of the B-PDSCH including paging information and the B-PDCCH including DCI that schedules the B-PDSCH.

The DCI that schedules the A-PDSCH including paging information may schedule at least one of the B-PDSCH and the A-PDSCH as in the cross carrier scheduling, for example.

The paging information included in the A-PDSCH may include one or more UE identifiers. In this case, when the UE identifier matches the UE identifier of the terminal 20 itself, the terminal 20 may assume that the paging information is for the terminal 20 itself, and may perform an operation of changing the UE state (for example, transition to the RRC CONNECTED state according to the random access process).

In addition, the UE identifier in this case may be indicated in common, or may be indicated separately, for the baseline channel and the additional channel. In other words, the state management of the terminal 20 may be performed in common, or may be performed separately, for the baseline channel and for the additional channel.

The A-PDSCH including paging information and the A-PDCCH including DCI that schedules the A-PDSCH may be enabled to be received by a terminal 20 with a specific type or terminal capability.

In addition, the A-PDSCH and the B-PDSCH including paging information and the A-PDCCH and the B-PDCCH including DCIs that schedule the A-PDSCH and the B-PDSCH may be multiplexed in at least one of time, frequency, and code in the same BWP or in different BWPs in the same cell, or may be transmitted in different cells. In other words, with respect to the baseline channel and the additional channel, a common BWP may be defined or configured, or individual BWPs may be defined or configured.

In addition, the terminal 20 may assume that at least one of: the A-PDSCH and the B-PDSCH including paging information; and the A-PDCCH and the B-PDCCH including DCIs that schedule the A-PDSCH and the B-PDSCH, are transmitted by using the same transmission beam (spatial filter). Here, the above-described assumption may be limited to a case in which at least one of: the A-PDSCH and the B-PDSCH including paging information; and the A-PDCCH and the B-PDCCH including DCIs that schedule the A-PDSCH and the B-PDSCH, are in at least one of the same BWP, the same cell, the same frequency band, and the same frequency range (FR1/FR2). In addition, the terminal 20 may assume that at least one of: an A-PDSCH and a B-PDSCH with a specific corresponding relationship; and an A-PDCCH and a B-PDCCH with a specific corresponding relationship, are transmitted by using the same transmission beam (spatial filter).

Here, whether there is a specific corresponding relationship may be indicated from the base station 10 to the terminal 20. An indication indicating whether there is a specific corresponding relationship may be included in the B-PDSCH including paging information, may be included in the signal/channel of the baseline channel other than the B-PDSCH including paging information (for example, a B-PDSCH that does not include paging information), or may be included in the signal/channel of an additional channel (third band) different from the additional channel (second band) in which the A-PDSCH including paging information is transmitted (for example, an A-PDSCH that does not include paging information, or the like).

It may be determined that there is a specific corresponding relationship when at least one of: the A-PDSCH and the B-PDSCH including paging information; and the A-PDCCH and the B-PDCCH including DCIs that schedule the A-PDSCH and the B-PDSCH, overlap in the time domain, that is, are multiplexed in the frequency domain or in the code domain.

Here, the case in which there is a specific corresponding relationship may be limited to at least one of the same BWP, the same cell, the same frequency band, or the same frequency range (FR1/FR2).

In addition, the terminal 20 may assume that at least one of: the A-PDSCH and the B-PDSCH including paging information; and the A-PDCCH and the B-PDCCH including DCIs that schedule the A-PDSCH and the B-PDSCH, have the same transmission period or have different transmission periods. In addition, the terminal 20 may assume that at least one of: the A-PDSCH and the B-PDSCH with a specific corresponding relationship; and the A-PDCCH and the B-PDCCH with a specific corresponding relationship, have a same transmission period.

### (Effects of a wireless communication system related to an embodiment 3)

In the wireless communication system related to an embodiment of the present invention, the terminal 20 receives a shared channel of the baseline channel (B-PDSCH) including paging information. According to the above configuration, it is possible to appropriately transmit and receive paging information and resources are enabled to be appropriately used in accordance with the capability in a case where the baseline channel and the additional channel are used together.

The terminal 20 may further receive an A-PDSCH including paging information in a case where an indication indicating that there is a shared channel of the additional channel (A-PDSCH) including paging information is received. According to the above configuration, for example, paging information is enabled to be appropriately transmitted and received by effectively using the additional channel in a case where the bandwidth of the baseline channel is small.

### (Relationship between an embodiment 1, an embodiment 2, and an embodiment 3)

The wireless communication system may perform together an embodiment 1 and an embodiment 3, or may perform an embodiment 2 and an embodiment 3. In addition, the wireless communication system may perform together an embodiment 1, an embodiment 2, and an embodiment 3. By performing together: the embodiment 1 or the embodiment 2; and the embodiment 3, system information and paging information can be transmitted and received in a distributed manner, and thus, resources can be effectively used.

As described above, according to a technique related to an embodiment of the present invention, a technique is provided that enables resources to be used appropriately in accordance with the capability.

### (Device configuration)

Next, a functional configuration example of the base station 10 and the terminal 20 for performing the processes and operations described above will be described.

### <Base station 10>

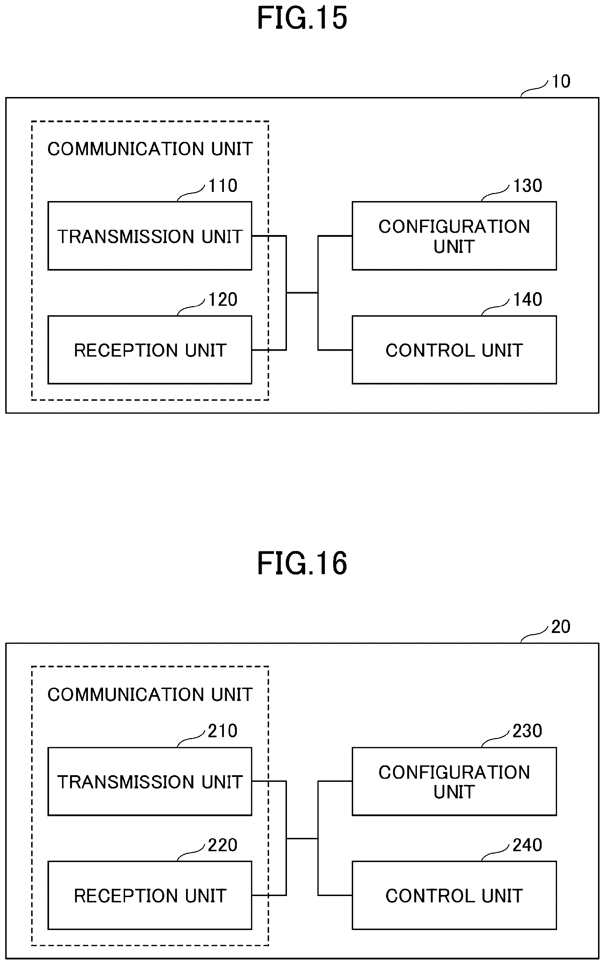

Fig. 15 is a diagram illustrating an example of a functional configuration of the base station 10. As shown in Fig. 15, the base station 10 includes a transmission unit 110, a reception unit 120, a configuration unit 130, and a control unit 140. The functional structure illustrated in Fig. 15 is merely an example. Functional divisions and names of functional units may be anything as long as operations according to an embodiment of the present invention can be performed. Further, the transmission unit 110 and the reception unit 120 may be combined and may be referred to as a communication unit.

The transmission unit 110 includes a function for generating a signal to be transmitted to the terminal 20 side and transmitting the signal wirelessly. The reception unit 120 includes a function for receiving various signals transmitted from the terminal 20 and acquiring, for example, information of a higher layer from the received signals. Further, the transmission unit 110 has a function to transmit NR-PSS, NR-SSS, NR-PBCH, DL/UL control signals, DCI via PDCCH, data via PDSCH, and the like, to the terminal 20.

The configuration unit 130 stores preset configuration information and various configuration information items to be transmitted to the terminal 20 in a storage device included in the setting unit 130 and reads the preset configuration information from the storage apparatus if necessary.

The control unit 140 performs scheduling of the terminal 20 for DL reception or UL transmission, via the transmission unit 110. In addition, the control unit 140 includes a function of performing LBT. The functional units related to signal transmission in the control unit 140 may be included in the transmission unit 110, and the functional units related to signal reception in the control unit 140 may be included in the reception unit 120. Further, the transmission unit 110 may be referred to as a transmitter, and the reception unit 120 may be referred to as a receiver.

### <Terminal 20>

Fig. 16 is a diagram illustrating an example of a functional configuration of the terminal 20. As shown in FIG. 16, the terminal 20 includes a transmission unit 210, a reception unit 220, a configuration unit 230, and a control unit 240. The functional structure illustrated in Fig. 16 is merely an example. Functional divisions and names of functional units may be anything as long as operations according to an embodiment of the present invention can be performed. the transmission unit 210 and the reception unit 220 may be combined and may be referred to as a communication unit.

The transmission unit 210 generates a transmission signal from transmission data and transmits the transmission signal wirelessly. The reception unit 220 receives various signals wirelessly and obtains upper layer signals from the received physical layer signals. In addition, the reception unit 220 has a function of receiving NR-PSS, NR-SSS, NR-PBCH, DL/UL/SL control signals, DCI via PDCCH, data via PDSCH, etc., transmitted from the base station 10. In addition, for example, with respect to the D2D communications, the transmission unit 210 may transmit, to another terminal 20, PSCCH (Physical Sidelink Control Channel), PSSCH (Physical Sidelink Shared Channel), PSDCH (Physical Sidelink Discovery Channel), PSBCH (Physical Sidelink Broadcast Channel), etc., and the reception unit 120 may receive, from the another terminal 20, PSCCH, PSSCH, PSDCH, or PSBCH.

The configuration unit 230 stores various configuration information items received from the base station 10 or the another terminal by the reception unit 220 in the storage device included in the configuration unit 230, and reads them from the storage device as necessary. In addition, the configuration unit 230 also stores preconfigured configuration information. The control unit 240 controls the terminal 20. In addition, the control unit 240 includes a function of performing LBT.

In addition, a communication method below may be performed.

### <Configurations related to an embodiment 1, embodiments 1 and 2, embodiments 1, 2, and 3>

### (First item)

A terminal that includes: a reception unit configured to receive, in a first band, information related to a second band; and
a control unit configured to use together a signal in the first band and a signal in the second band, wherein
the reception unit receives a broadcast signal of the first band including system information.

### (Second item)

The terminal as described in the first item, wherein the reception unit further receives a broadcast signal of the second band.

### (Third item)

The terminal as described in the second item, wherein the reception unit further receives a shared channel of the first band including system information.

### (Fourth item)

The terminal as described in the third item, wherein the reception unit further receives a shared channel of the second band including system information.

### (Fifth item)

The terminal as described in one of items from the first item to the fourth item, wherein the reception unit further receives a shared channel of the first band including paging information.

### (Sixth item)

A communication method performed by a terminal, the communication method including: receiving, in a first band, information related to a second band;
using together a signal in the first band and a signal in the second band; and
receiving a broadcast signal of the first band including system information.

According to one of the above-described configurations, a technique is provided that enables resources to be appropriately used in accordance with the capability. According to the second item, a broadcast signal of the second band can be received. According to the third item, system information can be received in a further distributed manner by receiving a shared channel of the first band including system information. According to the fourth item, transmission and reception of system information can be further efficiently performed by receiving a shared channel of the second band including system information. According to the fifth item, transmission and reception of paging information can be performed by receiving a shared channel of the first band including paging information.

### <Configurations related to the embodiment 2, and the embodiments 2 and 3>

### (First item)

A terminal that includes: a reception unit configured to receive, in a first band, information related to a second band; and
a control unit configured to use together a signal in the first band and a signal in the second band, wherein
the reception unit receives a shared channel of the first band including system information.

### (Second item)

The terminal as described in the first item, wherein the reception unit further receives a shared channel of the second band including system information.

### (Third item)

The terminal as described in the second item, wherein the shared channel of the first band is a channel that can be received by a terminal with a freely selected type or terminal capability, and
the shared channel of the second band is a channel that can be received by a terminal with a specific type or terminal capability.

### (Fourth item)

The terminal as described in one of items from the first item to the third item, wherein the reception unit further receives a shared channel of the first band including paging information.

### (Fifth item)

The terminal as described in the fourth item, wherein the reception unit further receives a shared channel of the second band including paging information.

### (Sixth item)

A communication method performed by a terminal, the communication method including: receiving, in a first band, information related to a second band;
using together a signal in the first band and a signal in the second band; and
receiving a shared channel of the first band including system information.

According to one of the above-described configurations, a technique is provided that enables resources to be appropriately used in accordance with the capability. According to the second item, a shared channel of the second band can be received. According to the third item, system information can be received in a further distributed manner by using together a shared channel of the first band and a shared channel of the second band, and by receiving, excluding a terminal with a specific type or terminal capability, only the shared channel of the first band. According to the fourth item, transmission and reception of paging information can be performed by receiving the shared channel of the first band including paging information. According to the fifth item, transmission and reception of paging information can be performed in a distributed manner by receiving the shared channel of the second band including paging information.

### (Hardware structure)

In the above functional structure diagrams used for describing an embodiment of the present invention (Fig. 15 and Fig. 16), functional unit blocks are shown. The functional blocks (function units) are realized by a freely-selected combination of hardware and/or software. Further, realizing means of each functional block is not limited in particular. In other words, each functional block may be realized by a single apparatus in which multiple elements are coupled physically and/or logically, or may be realized by two or more apparatuses that are physically and/or logically separated and are physically and/or logically connected (e.g., wired and/or wireless). The functional blocks may be realized by combining the above-described one or more apparatuses with software.

Functions include, but are not limited to, judging, determining, calculating, processing, deriving, investigating, searching, checking, receiving, transmitting, outputting, accessing, resolving, selecting, establishing, comparing, assuming, expecting, and deeming, broadcasting, notifying, communicating, forwarding, configuring, reconfiguring, allocating, mapping, and assigning, etc. For example, a functional block (component) that functions to perform transmission is called a transmitting unit or a transmitter. In either case, as described above, the implementation method is not particularly limited.

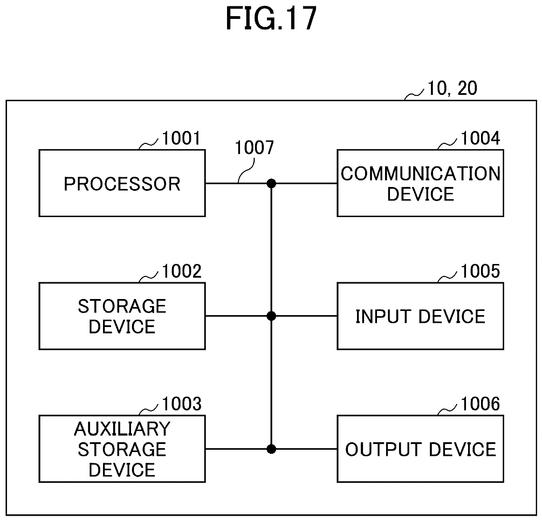

For example, the base station 10, terminal 20, etc., according to an embodiment of the present disclosure may function as a computer for processing the radio communication method of the present disclosure. Fig. 17 is a drawing illustrating an example of hardware structures of the base station 10 and terminal 20 according to an embodiment of the present invention. Each of the above-described base station 10 and the terminal 20 may be physically a computer device including a processor 1001, a storage device 1002, an auxiliary storage device 1003, a communication device 1004, an input device 1005, an output device 1006, a bus 1007, etc.

It should be noted that, in the descriptions below, the term "apparatus" can be read as a circuit, a device, a unit, etc. The hardware structures of the base station 10 and terminal 20 may include one or more of each of the devices illustrated in the figure, or may not include some devices.

Each function in the base station 10 and terminal 20 is realized by having the processor 1001 perform an operation by reading predetermined software (programs) onto hardware such as the processor 1001 and the storage device 1002, and by controlling communication by the communication device 1004 and controlling at least one of reading and writing of data in the storage device 1002 and the auxiliary storage device 1003.

The processor 1001 controls the entire computer by, for example, controlling the operating system. The processor 1001 may include a central processing unit (CPU) including an interface with a peripheral apparatus, a control apparatus, a calculation apparatus, a register, etc. For example, the above-described control unit 140, control unit 240, and the like, may be implemented by the processor 1001.

Further, the processor 1001 reads out onto the storage device 1002 a program (program code), a software module, or data from the auxiliary storage device 1003 and/or the communication device 1004, and performs various processes according to the program, the software module, or the data. As the program, a program is used that causes the computer to perform at least a part of operations according to an embodiment of the present invention described above. For example, the control unit 140 of the base station 10 illustrated in Fig. 15 may be realized by control programs that are stored in the storage device 1002 and are executed by the processor 1001. Further, for example, the control unit 240 of the terminal 20 illustrated in Fig. 16 may be realized by control programs that are stored in the storage device 1002 and are executed by the processor 1001. The various processes have been described to be performed by a single processor 1001. However, the processes may be performed by two or more processors 1001 simultaneously or sequentially. The processor 1001 may be implemented by one or more chips. It should be noted that the program may be transmitted from a network via a telecommunication line.

The storage device 1002 is a computer-readable recording medium, and may include at least one of a ROM (Read Only Memory), an EPROM (Erasable Programmable ROM), an EEPROM (Electrically Erasable Programmable ROM), a RAM (Random Access Memory), etc. The storage device 1002 may be referred to as a register, a cache, a main memory, etc. The storage device 1002 is capable of storing programs (program codes), software modules, or the like, that are executable for performing communication processes according to an embodiment of the present invention.

The auxiliary storage device 1003 is a computer-readable recording medium, and may include at least one of, for example, an optical disk such as a CD-ROM (Compact Disc ROM), a hard disk drive, a flexible disk, a magneto optical disk (e.g., compact disk, digital versatile disk, Blu-ray (registered trademark) disk), a smart card, a flash memory (e.g., card, stick, key drive), a floppy (registered trademark) disk, a magnetic strip, etc. The above recording medium may be a database including the storage device 1002 and/or the auxiliary storage device 1003, a server, or any other appropriate medium.

The communication device 1004 is hardware (transmission or reception device) for communicating with computers via at least one of a wired network and a wireless network, and may be referred to as a network device, a network controller, a network card, a communication module, etc. The communication device 1004 may include a high frequency switch, duplexer, filter, frequency synthesizer, or the like, for example, to implement at least one of a frequency division duplex (FDD) and a time division duplex (TDD). For example, the transmitting/receiving antenna, the amplifier unit, the transmitting/receiving unit, the transmission line interface, and the like, may be implemented by the communication device 1004. The transmitting/receiving unit may be physically or logically divided into a transmitting unit and a receiving unit.

The input device 1005 is an input device that receives an external input (e.g., keyboard, mouse, microphone, switch, button, sensor). The output device 1006 is an output device that outputs something to the outside (e.g., display, speaker, LED lamp). It should be noted that the input device 1005 and the output device 1006 may be integrated into a single device (e.g., touch panel).

Further, the apparatuses including the processor 1001, the storage device 1002, etc., are connected to each other via the bus 1007 used for communicating information. The bus 1007 may include a single bus, or may include different buses between the apparatuses.

Further, each of the base station 10 and the terminal 20 may include hardware such as a microprocessor, a digital signal processor (DSP), an ASIC (Application Specific Integrated Circuit), a PLD (Programmable Logic Device), a FPGA (Field Programmable Gate Array), etc., and a part or all of each functional block may be realized by the hardware. For example, the processor 1001 may be implemented by at least one of the above hardware elements.

### (Supplement of embodiment)

As described above, one or more embodiments have been described. The present invention is not limited to the above embodiments. A person skilled in the art should understand that there are various modifications, variations, alternatives, replacements, etc., of the embodiments. In order to facilitate understanding of the present invention, specific values have been used in the description. However, unless otherwise specified, those values are merely examples and other appropriate values may be used. The division of the described items may not be essential to the present invention. The things that have been described in two or more items may be used in a combination if necessary, and the thing that has been described in one item may be appropriately applied to another item (as long as there is no contradiction). Boundaries of functional units or processing units in the functional block diagrams do not necessarily correspond to the boundaries of physical parts. Operations of multiple functional units may be physically performed by a single part, or an operation of a single functional unit may be physically performed by multiple parts. The order of sequences and flowcharts described in an embodiment of the present invention may be changed as long as there is no contradiction. For the sake of description convenience, the base station 10 and the terminal 20 have been described by using functional block diagrams. However, the apparatuses may be realized by hardware, software, or a combination of hardware and software. The software executed by a processor included in the base station 10 according to an embodiment of the present invention and the software executed by a processor included in the terminal 20 according to an embodiment of the present invention may be stored in a random access memory (RAM), a flash memory, a read only memory (ROM), an EPROM, an EEPROM, a register, a hard disk (HDD), a removable disk, a CD-ROM, a database, a server, or any other appropriate recording medium.

Further, information indication may be performed not only by methods described in an aspect/embodiment of the present specification but also a method other than those described in an aspect/embodiment of the present specification. For example, the information transmission may be performed by physical layer signaling (e.g., DCI, UCI (Uplink Control Information)), upper layer signaling (e.g., RRC (Radio Resource Control) signaling, MAC (Medium Access Control) signaling, broadcast information (MIB (Master Information Block), SIB (System Information Block))), other signals, or combinations thereof. Further, RRC signaling may be referred to as an RRC message. The RRC signaling may be, for example, an RRC connection setup message, an RRC connection reconfiguration message, or the like.

Each aspect/embodiment described in the present disclosure may be applied to at least one of a system using LTE (Long Term Evolution), LTE-A (LTE-Advanced), SUPER 3G, IMT-Advanced, 4G (4th generation mobile communication system), 5G (5th generation mobile communication system), FRA (Future Radio Access), NR (new Radio), W-CDMA (registered trademark), GSM (registered trademark), CDMA2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), Bluetooth (registered trademark), and other appropriate systems, and a next generation system enhanced therefrom. Further, multiple systems may also be applied in combination (e.g., at least one of LTE and LTE-A combined with 5G, etc.).

The order of processing steps, sequences, flowcharts or the like of an aspect/embodiment described in the present specification may be changed as long as there is no contradiction. For example, in a method described in the present specification, elements of various steps are presented in an exemplary order. The order is not limited to the presented specific order.

The particular operations, that are supposed to be performed by the base station 10 in the present specification, may be performed by an upper node in some cases. In a network including one or more network nodes including the base station 10, it is apparent that various operations performed for communicating with the terminal 20 may be performed by the base station 10 and/or another network node other than the base station 10 (for example, but not limited to, MME or S-GW). According to the above, a case is described in which there is a single network node other than the base station 10. However, a combination of multiple other network nodes may be considered (e.g., MME and S-GW).

The information or signals described in this disclosure may be output from a higher layer (or lower layer) to a lower layer (or higher layer). The information or signals may be input or output through multiple network nodes.

The input or output information may be stored in a specific location (e.g., memory) or managed using management tables. The input or output information may be overwritten, updated, or added. The information that has been output may be deleted. The information that has been input may be transmitted to another apparatus.

A decision or a determination in an embodiment of the present invention may be implemented by a value (0 or 1) represented by one bit, by a boolean value (true or false), or by comparison of numerical values (e.g., comparison with a predetermined value).

Software should be broadly interpreted to mean, whether referred to as software, firmware, middle-ware, microcode, hardware description language, or any other name, instructions, instruction sets, codes, code segments, program codes, programs, subprograms, software modules, applications, software applications, software packages, routines, subroutines, objects, executable files, executable threads, procedures, functions, and the like.

Further, software, instructions, information, and the like may be transmitted and received via a transmission medium. For example, in the case where software is transmitted from a website, server, or other remote source using at least one of wired line technologies (such as coaxial cable, fiber optic cable, twisted pair, digital subscriber line (DSL) and wireless technologies (infrared, microwave, etc.), at least one of these wired line technologies and wireless technologies is included within the definition of the transmission medium.

Information, a signal, or the like, described in the present specification may represented by using any one of various different technologies. For example, data, an instruction, a command, information, a signal, a bit, a symbol, a chip, or the like, described throughout the present application, may be represented by a voltage, an electric current, electromagnetic waves, magnetic fields, a magnetic particle, optical fields, a photon, or a combination thereof.

It should be noted that a term used in the present specification and/or a term required for understanding of the present specification may be replaced by a term having the same or similar meaning. For example, a channel and/or a symbol may be a signal (signaling). Further, a signal may be a message. Further, the component carrier (CC) may be referred to as a carrier frequency, cell, frequency carrier, or the like.

As used in the present disclosure, the terms "system" and "network" are used interchangeably.

Further, the information, parameters, and the like, described in the present disclosure may be expressed using absolute values, relative values from predetermined values, or they may be expressed using corresponding different information. For example, a radio resource may be what is indicated by an index.

The names used for the parameters described above are not used as limitations. Further, the mathematical equations using these parameters may differ from those explicitly disclosed in the present disclosure. Because the various channels (e.g., PUCCH, PDCCH) and information elements may be identified by any suitable names, the various names assigned to these various channels and information elements are not used as limitations.

In the present disclosure, the terms "BS: Base Station", "Radio Base Station", "Base Station", "Fixed Station", "NodeB", "eNodeB (eNB)", "gNodeB (gNB)", "Access Point", "Transmission Point", "Reception Point", "Transmission/Reception Point", "Cell", "Sector", "Cell Group", "Carrier", "Component Carrier", and the like, may be used interchangeably. The base station may be referred to as a macro-cell, a small cell, a femtocell, a picocell and the like.

The base station may accommodate (provide) one or more (e.g., three) cells. In the case where the base station accommodates a plurality of cells, the entire coverage area of the base station may be divided into a plurality of smaller areas, each smaller area may provide communication services by means of a base station subsystem (e.g., an indoor small base station or a remote Radio Head (RRH)). The term "cell" or "sector" refers to a part or all of the coverage area of at least one of the base station and base station subsystem that provides communication services at the coverage.

In the present disclosure, terms such as "mobile station (MS)", "user terminal", "user equipment (UE)", "terminal", and the like, may be used interchangeably.

There is a case in which the mobile station may be referred to, by a person skilled in the art, as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other appropriate terms.

At least one of the base station and the mobile station may be referred to as a transmission apparatus, reception apparatus, communication apparatus, or the like. The at least one of the base station and the mobile station may be a device mounted on the mobile station, the mobile station itself, or the like. The mobile station may be a vehicle (e.g., a car, an airplane, etc.), an unmanned mobile body (e.g., a drone, an automated vehicle, etc.), or a robot (manned or unmanned). At least one of the base station and the mobile station may include an apparatus that does not necessarily move during communication operations. For example, at least one of the base station and the mobile station may be an IoT (Internet of Things) device such as a sensor.

Further, the base station in the present disclosure may be read as the terminal. For example, each aspect/embodiment of the present disclosure may be applied to a configuration in which communications between the base station and the terminal are replaced by communications between multiple terminals 20 (e.g., may be referred to as D2D (Device-to-Device), V2X (Vehicle-to-Everything), etc.). In this case, the function of the base station 10 described above may be provided by the terminal 20. Further, the phrases "up" and "down" may also be replaced by the phrases corresponding to terminal-to-terminal communication (e.g., "side"). For example, an uplink channel, a downlink channel, or the like, may be read as a sidelink channel.

Similarly, the terminal in the present disclosure may be read as the base station. In this case, the function of the terminal described above may be provided by the base station.

The term "determining" used in the present specification may include various actions or operations. The "determining" may include, for example, a case in which "judging", "calculating", "computing", "processing", "deriving", "investigating", "looking up", "search", "inquiry" (e.g., looking up a table, database, or other data structures), or "ascertaining" is deemed as "determining". Further, the "determining" may include a case in which "receiving" (e.g., receiving information), "transmitting" (e.g., transmitting information), "inputting", "outputting", or "accessing" (e.g., accessing data in a memory) is deemed as "determining". Further, the "determining" may include a case in which "resolving", "selecting", "choosing", "establishing", "comparing", or the like is deemed as "determining". In other words, the "determining" may include a case in which a certain action or operation is deemed as "determining". Further, "decision" may be read as "assuming", "expecting", or "considering", etc.

The term "connected" or "coupled" or any variation thereof means any direct or indirect connection or connection between two or more elements and may include the presence of one or more intermediate elements between the two elements "connected" or "coupled" with each other. The coupling or connection between the elements may be physical, logical, or a combination thereof. For example, "connection" may be read as "access". As used in the present disclosure, the two elements may be thought of as being "connected" or "coupled" to each other using at least one of the one or more wires, cables, and printed electrical connections and, as a number of nonlimiting and non-inclusive examples, electromagnetic energy having wavelengths in the radio frequency region, the microwave region, and the light (both visible and invisible) region.

The reference signal may be abbreviated as RS or may be referred to as a pilot, depending on the applied standards.

The description "based on" used in the present specification does not mean "based on only" unless otherwise specifically noted. In other words, the phrase "based on" means both "based on only" and "based on at least".

Any reference to an element using terms such as "first" or "second" as used in the present disclosure does not generally limit the amount or the order of those elements. These terms may be used in the present disclosure as a convenient way to distinguish between two or more elements. Therefore, references to the first and second elements do not imply that only two elements may be employed or that the first element must in some way precede the second element.

"Means" included in the configuration of each of the above apparatuses may be replaced by "parts", "circuits", "devices", etc.

In the case where the terms "include", "including" and variations thereof are used in the present disclosure, these terms are intended to be comprehensive in the same way as the term "comprising". Further, the term "or" used in the present specification is not intended to be an "exclusive or".

A radio frame may include one or more frames in the time domain. Each of the one or more frames in the time domain may be referred to as a subframe. The subframe may further include one or more slots in the time domain. The subframe may be a fixed length of time (e.g., 1 ms) independent from the numerology.

The numerology may be a communication parameter that is applied to at least one of the transmission or reception of a signal or channel. The numerology may indicate at least one of, for example, SubCarrier Spacing (SCS), bandwidth, symbol length, cyclic prefix length, transmission time interval (TTI), number of symbols per TTI, radio frame configuration, specific filtering processing performed by the transceiver in the frequency domain, and specific windowing processing performed by the transceiver in the time domain.

The slot may include one or more symbols in the time domain, such as OFDM (Orthogonal Frequency Division Multiplexing) symbols, SC-FDMA (Single Carrier Frequency Division Multiple Access) symbols, and the like. The slot may be a time unit based on the numerology.

The slot may include a plurality of mini slots. Each mini slot may include one or more symbols in the time domain. Further, the mini slot may be referred to as a sub-slot. The mini slot may include fewer symbols than the slot. PDSCH (or PUSCH) transmitted in time units greater than a mini slot may be referred to as PDSCH (or PUSCH) mapping type A. PDSCH (or PUSCH) transmitted using a mini slot may be referred to as PDSCH (or PUSCH) mapping type B.

A radio frame, a subframe, a slot, a mini slot and a symbol all represent time units for transmitting signals. Different terms may be used for referring to a radio frame, a subframe, a slot, a mini slot and a symbol, respectively.

For example, one subframe may be referred to as a transmission time interval (TTI), multiple consecutive subframes may be referred to as a TTI, and one slot or one mini slot may be referred to as a TTI. In other words, at least one of the subframe and the TTI may be a subframe (1 ms) in an existing LTE, a period shorter than 1 ms (e.g., 1-13 symbols), or a period longer than 1 ms. It should be noted that the unit representing the TTI may be referred to as a slot, a mini slot, or the like, rather than a subframe. Further, a slot may be referred to as a unit time. The unit time may vary for each cell depending on the numerology.

The TTI refers to, for example, the minimum time unit for scheduling in wireless communications. For example, in an LTE system, a base station schedules each terminal 20 to allocate radio resources (such as frequency bandwidth, transmission power, etc. that can be used in each terminal 20) in TTI units. The definition of TTI is not limited to the above.

The TTI may be a transmission time unit, such as a channel-encoded data packet (transport block), code block, codeword, or the like, or may be a processing unit, such as scheduling or link adaptation. It should be noted that, when a TTI is provided, the time interval (e.g., the number of symbols) during which the transport block, code block, codeword, or the like, is actually mapped may be shorter than the TTI.

It should be noted that, when one slot or one mini slot is referred to as a TTI, one or more TTIs (i.e., one or more slots or one or more mini slots) may be the minimum time unit for scheduling. Further, the number of slots (the number of mini slots) constituting the minimum time unit of the scheduling may be controlled.

A TTI having a time length of 1 ms may be referred to as a normal TTI (a TTI in LTE Rel. 8-12), a long TTI, a normal subframe, a long subframe, a slot, and the like. A TTI that is shorter than the normal TTI may be referred to as a shortened TTI, a short TTI, a partial TTI (or fractional TTI), a shortened subframe, a short subframe, a mini slot, a subslot, a slot, or the like.

It should be noted that the long TTI (e.g., normal TTI, subframe, etc.,) may be replaced with a TTI having a time length exceeding 1 ms, and the short TTI (e.g., shortened TTI, etc.,) may be replaced with a TTI having a TTI length less than the TTI length of the long TTI and a TTI length greater than 1 ms.

A resource block (RB) is a time domain and frequency domain resource allocation unit and may include one or more consecutive subcarriers in the frequency domain. The number of subcarriers included in an RB may be the same, regardless of the numerology, and may be 12, for example. The number of subcarriers included in an RB may be determined on the basis of numerology.

Further, the time domain of an RB may include one or more symbols, which may be 1 slot, 1 mini slot, 1 subframe, or 1 TTI in length. One TTI, one subframe, etc., may each include one or more resource blocks.

It should be noted that one or more RBs may be referred to as physical resource blocks (PRBs, Physical RBs), sub-carrier groups (SCGs), resource element groups (REGs), PRB pairs, RB pairs, and the like.

Further, a resource block may include one or more resource elements (RE). For example, 1 RE may be a radio resource area of one sub-carrier and one symbol.

The bandwidth part (BWP) (which may also be referred to as a partial bandwidth, etc.) may represent a subset of consecutive common RBs (common resource blocks) for a given numerology in a carrier. Here, a common RB may be identified by an index of RB relative to the common reference point of the carrier. A PRB may be defined in a BWP and may be numbered within the BWP.

BWP may include BWP for UL (UL BWP) and BWP for DL (DL BWP). For a UE, one or more BWPs may be configured in one carrier.

At least one of the configured BWPs may be activated, and the UE may assume that the UE will not transmit and receive signals/channels outside the activated BWP. It should be noted that the terms "cell" and "carrier" in this disclosure may be replaced by "BWP."

Structures of a radio frame, a subframe, a slot, a mini slot, and a symbol described above are exemplary only. For example, the number of subframes included in a radio frame, the number of slots per subframe or radio frame, the number of mini slots included in a slot, the number of symbols and RBs included in a slot or mini slot, the number of subcarriers included in an RB, the number of symbols in a TTI, the symbol length, the cyclic prefix (CP) length, and the like, may be changed in various ways.

In the present disclosure, in a case where an article is added by translation, for example "a", "an", and "the", the disclosure may include that the noun following these articles is plural.

In this disclosure, the term "A and B are different" may mean "A and B are different from each other." It should be noted that the term "A and B are different" may mean "A and B are different from C." Terms such as "separated" or "combined" may be interpreted in the same way as the above-described "different".

An aspect/embodiment described in the present specification may be used independently, may be used in combination, or may be used by switching according to operations. Further, notification (transmission/reporting) of predetermined information (e.g., notification (transmission/reporting) of "X") is not limited to an explicit notification (transmission/reporting), and may be performed by an implicit notification (transmission/reporting) (e.g., by not performing notification (transmission/reporting) of the predetermined information).

As described above, the present invention has been described in detail. It is apparent to a person skilled in the art that the present invention is not limited to one or more embodiments of the present invention described in the present specification. Modifications, alternatives, replacements, etc., of the present invention may be possible without departing from the subject matter and the scope of the present invention defined by the descriptions of claims. Therefore, the descriptions of the present specification are for illustrative purposes only, and are not intended to be limitations to the present invention.

### DESCRIPTION OF THE REFERENCE NUMERALS

10 Base station
110 Transmission unit
120 Reception unit
130 Configuration unit
140 Control unit
20 Terminal
210 Transmission unit
220 Reception unit
230 Configuration unit
240 Control unit
1001 Processor
1002 Storage device
1003 Auxiliary storage device
1004 Communication device
1005 Input device
1006 Output device

## Claims

1. A terminal comprising:
a reception unit configured to receive, in a first band, information related to a second band; and
a control unit configured to use together a signal in the first band and a signal in the second band, wherein
the reception unit receives a broadcast signal of the first band including system information.

2. The terminal as claimed in claim 1, wherein
the reception unit further receives a broadcast signal of the second band.

3. The terminal as claimed in claim 1 or 2, wherein
the reception unit further receives a shared channel of the first band including system information.

4. The terminal as claimed in claim 3, wherein
the reception unit further receives a shared channel of the second band including system information.

5. The terminal as claimed in any one of claims 1 to 4, wherein
the reception unit further receives a shared channel of the first band including paging information.

6. A communication method performed by a terminal, the communication method comprising:
receiving, in a first band, information related to a second band;
using together a signal in the first band and a signal in the second band; and
receiving a broadcast signal of the first band including system information.
